# EUROPÄISCHE PATENTANMELDUNG

(11) **EP 0 811 809 A2**
(43) Veröffentlichungstag der Anmeldung: **10.12.1997**
(21) Anmeldenummer: 97108950.3
(22) Anmeldetag: 03.06.1997
(51) Int. Cl.: F24D 11/02

(54) **Verfahren zum Betreiben einer Wärempumpe**

(30) Priorität: 05.06.1996 DE 19622609
(71) Anmelder: Schmitz, Johannes, Dr.-Ing., D-52428 Jülich (DE); Schmitz-Stotz, Patricia, Dipl.-Ing., D-52428 Jülich (DE)
(72) Erfinder: Schmitz, Johannes, Dr.-Ing., D-52428 Jülich (DE); Schmitz-Stotz, Patricia, Dipl.-Ing., D-52428 Jülich (DE)
(74) Vertreter: Castell, Klaus, Dr.

(57) **Zusammenfassung**

Die Temperaturniveaus vom Verdampfer- und Kondensatorkreislauf einer Wärmepumpenanlage werden je nach Temperaturniveau der gewünschten Nutzwärme so beeinflußt, daß der Unterschied der Temperaturniveaus möglichst klein ist. Dazu kann beispielsweise durch Sonnenenergie der kältere Kreislauf erwärmt werden oder Verdampfer - und Kondensatorkreislauf werden kurzfristig miteinader verbunden. Das erfindungsgemäße Verfahren erlaubt somit eine Annäherung der Kreislauftemperaturen und dadurch eine Steigerung des Wirkungsgrades der Wärmepumpe. Der übliche Wirkungsgrad von drei wird durch dieses Verfahren etwa verdoppelt.

## Beschreibung

Verfahren zum Betreiben einer Wasser-Wasser-Wärmepumpe und Vorrichtung zur Durchführung des Verfahrens.

Die Erfindung betrifft ein Verfahren zum Betreiben einer Wasser-Wasser-Wärmepumpe, mit der einem Verdampferkreislauf Wärmeenergie entzogen wird und einem Kondensatorkreislauf zugeführt wird, und eine Vorrichtung zur Durchführung des Verfahrens.

Verfahren zum Betreiben von Wärmepumpen sind allgemein bekannt und sie dienen im allgemeinen dazu, in einem Verdampferkreislauf auf einem relativ niedrigen Temperaturniveau einem größeren Wärmespeicher wie beispielsweise dem Erdreich oder einem See Wärme zu entziehen und mit einem Kondensatorkreislauf beispielsweise einem Wohngebäude Wärmeenergie auf einem höheren Energieniveau zuzuführen.

Der Wirkungsgrad einer idealen Wärmepumpe wird durch die Carnotsche Leistungszahl angegeben. Bei einer Wärmespeichertemperatur von beispielsweise 10° C (T = 283 K) und einer Temperatur von 55° C (T = 328 K) des verdichteten Kältemitteldampfes würde die ideale Leistungszahl ungefähr 7 sein. Bei Beachtung der zum Betrieb des Verdichters und der Umwälzpumpe benötigten Energie ist die tatsächliche Leistungszahl ca. 3, das heißt, bei gleichem Stromverbrauch kann man mit einer Wärmepumpe dreimal so viel Wärme ins Haus bringen wie mit einer Elektroheizung.

Aus der Berechnung des Wirkungsgrades wird deutlich, daß es anzustreben ist, keine großen Unterschiede zwischen der Wärmespeichertemperatur und der Temperatur des verdichteten Kältemitteldampfes zu haben. Dies ist in der Praxis jedoch nicht möglich, da einerseits relativ hohe Temperaturen zum Betreiben von Heizanlagen benötigt werden und andererseits meist nur Wärmespeicher mit relativ niedrigen Temperaturen zur Verfügung stehen. Außerdem kühlt sich der Wärmespeicher beim Betreiben der Wärmepumpe immer weiter ab.

Der Erfindung liegt daher die Aufgabe zugrunde, ein Verfahren und eine Vorrichtung zum Durchführen des Verfahrens bereitzustellen, die es erlauben, Wärmepumpen mit einem möglichst hohen Wirkungsgrad zur Verfügung zu stellen.

Diese Aufgabe wird dadurch gelöst, daß die Temperaturniveaus vom Kondensator- und Verdampferkreislauf je nach Temperaturniveau der gewünschten Nutzwärme so beeinflußt werden, dal der Unterschied der Temperaturniveaus möglichst klein ist.

Der Erfindung liegt die Erkenntnis zugrunde, daß die Wärmespeichertemperatur nicht zwangsläufig konstant sein muß, sondern zumindest über kurze Zeiten so erhöht werden kann, daß der Wirkungsgrad der Wärmepumpe ansteigt. Dies bringt den Vorteil, daß auch nur kurzfristig zur Verfügung stehende Wärme dazu genutzt werden kann, das Temperaturniveau von Verdampfer- oder Kondensatorkreislauf zu erhöhen, um den Unterschied zwischen den Temperaturniveaus zu verringern.

Durch das erfindungsgemäße Verfahren ist es möglich, die Leistungszahl der Wärmepumpe zu verdoppeln und somit anstelle mit einer üblichen Leistungszahl von etwa 3 mit einer Leistungszahl von etwa 6 zu arbeiten. Da die Wärmepumpe bei einer erhöhten Leistungszahl nur noch kürzere Zeiten in Betrieb sein muß, ist es möglich, die Betriebszeiten der Wärmepumpe in die Zeiten der Niedrigstromtarife der Elektrizitätsversorgungsunternehmen zu legen, um die Wärmepumpe somit zu Zeiten günstiger Stromtarife arbeiten zu lassen.

Voraussetzung zur Durchführung des Verfahrens ist, daß das Verdampferkreislauf-Temperaturniveau und/oder das Kondensatorkreislauf-Temperaturniveau z. B. durch Gebäudemassen als Wärmespeicher stabilisiert werden. Dadurch werden kurzfristige Änderungen der Temperaturniveaus vermieden, auch wenn die auf das System wirkenden äußeren Einflüsse sich stark verändern. Beispielsweise in Gebäuden kann dadurch ein relativ konstantes Raumklima auch bei schwankenden Außentemperaturen oder sich stark verändernder Sonneneinstrahlung aufrecht erhalten werden. Gebäudemassen eignen sich besonders gut als Wärmespeicher, da sie üblicherweise aus Stein- oder Betonmaterial bestehen, die eine besonders hohe Wärmekapazität aufweisen.

Den Gebäuderäumen wird vorteilhafterweise über Fußböden und/oder Decken Wärme zugeführt oder entzogen. Eine Verdopplung der Heiz- oder Kühlflächen bei der Nutzung von Fußboden und Deckenfläche im Vergleich zur herkömmlichen Fußbodenheizung bewirkt, daß keine Überhitzung- oder Unterkühlung der Gebäuderäume stattfindet, da die Vorlauftemperaturen aus dem Kondensator- oder Verdampferkreislauf der Wasser-Wasser-Wärmepumpe nur wenig über oder unter den Raumtemperaturen liegen. Aufgrund dieser doppelt verlegten Flächen ist es möglich, die Wasser-Wasser-Wärmepumpe mit einer sehr hohen Leistungszahl zu betreiben, da die Temperaturen des Kondensator- und des Verdampferkreislaufs einen geringen Unterschied aufweisen.

Diese Maßnahme der Heiz- und Kühlflächenverdopplung ist eine besonders vorteilhaft zur Durchführung des erfindungsgemäßen Verfahrens, da es eine energetisch günstige Möglichkeit ist, die Temperatur des Kondensatorkreislaufs zu minimieren.

Eine Ausgestaltung des erfindungsgemäßen Verfahrens sieht vor, daß Verdampfer- und Kondensatorkreislauf so miteinander verbunden werden, daß der Wärmeträger aus dem Verdampfer - den Kondensatorkreislauf und umgekehrt der Wärmeträger aus dem Kondensator- den Verdampferkreislauf durchströmt. Eine derartige Verbindung erlaubt ein unmittelbares Anpassen der Temperaturniveaus von Kondensator- und Verdampferkreislauf.

Diese Verbindung ist selbstverständlich nur dann möglich, wenn die Wärmeträger aus Verdampfer- und Kondensatorkreislauf identisch oder zumindest miteinander verträglich sind. Da die Erfindung jedoch anstrebt, die Temperaturniveaus von Kondensator- und Verdampferkreislauf möglichst eng beieinander zu halten, ist es möglich, dieselben Wärmeträger in den beiden Kreisläufen zu verwenden.

Bei einer derartigen Verbindung von Verdampfer- und Kondensatorkreislauf ist es vorteilhaft, die Kreisläufe miteinander zu verbinden, wenn der Kompressor der Wärmepumpe außer Betrieb ist. Durch die Steigerung der Leistungszahl ist es möglich, den Kompressor der Wärmepumpe nur in bestimmten Zeitintervallen einzuschalten, und dadurch kann in den Zwischenzeiten ein Ausgleich zwischen den Temperaturniveaus von Kondensator- und Verdampferkreislauf stattfinden.

Ist der Kompressor der Wasser-Wasser-Wärmepumpe außer Betrieb, so wird die Verbindung zwischen Verdampfer- und Kondensatorkreislauf geöffnet und die Temperaturniveaus der beiden Kreisläufe nähern sich einander an. In dem so entstandenen Mischkreislauf gibt die Luft-Wasser-Wärmepumpe ihre Wärme ab und sorgt so dafür, daß sich die Temperatur der beiden Kreisläufe erhöht, auch wenn die Wasser-Wasser-Wärmepumpe außer Betrieb ist. Durch diese aktive Maßnahme ist es möglich vor allem den Verdampferkreislauf der Wasser-Wasser-Wärmepumpe auf einem hohen Temperaturniveau zu halten, so daß die Leistungszahl der Wärmepumpe sehr hoch ist. Eine weitere Maßnahme, den Verdampferkreislauf der Wasser-Wasser-Wärmepumpe zu erwärmen, ist die Wärmerückgewinnung aus der Abluft mit einem Luft-Wasser-Wärmetauscher. Der Wärmetauscher kühlt die Abluft ab und gibt die zurückgewonnene Wärme direkt an den Verdampferkreislauf der Wasser-Wasser-Wärmepumpe ab.

Für die meisten Anwendungen des erfindungsgemäßen Verfahrens hat sich als idealer Wärmeträger im Verdampfer- und Kondensatorkreislauf Wasser oder eine wäßrige Lösung bewährt. Da nach dem erfindungsgemäßen Verfahren eine zu starke Unterkühlung des Verdampferkreislaufs vermieden wird, ist sogar der Einsatz von purem Wasser ohne Zusatz von Frostschutzmitteln möglich.

Je nach Einsatz des erfindungsgemäßen Verfahrens ist es von Vorteil, wenn Speicher wie Brauchwasserspeicher oder Kaltwasserspeicher zum Beeinflußen der Temperaturniveaus von Verdampfer- und Kondensatorkreislauf verwendet werden.

Eine weitere Ausgestaltung des erfindungsgemäßen Verfahrens sieht vor, daß Sonnenenergie mit Hilfe von Luft zum Beeinflussen der Temperaturniveaus von Verdampfer- oder Kondensatorkreislauf verwendet wird. Üblicherweise staut sich unter einer Dachabdeckung von Gebäuden warme Luft, die beispielsweise dazu verwendet werden kann, den Verdampferkreislauf zu erwärmen, um dadurch das Temperaturniveau des Verdampferkreislaufs an das Temperaturniveau des Kondensatorkreislaufs anzunähern.

Diese durch eine Dachabdeckung hindurch geleitete Luft dient nach einer Ausgestaltung der Erfindung als Frischluftzufuhr für ein Haus. Die erwärmte Luft kann dadurch einerseits zur Beeinflussung der Wärmepumpenkreisläufe und andererseits als Frischluftzufuhr für ein Haus dienen.

Nach einer weiteren Ausgestaltung der Erfindung ist vorgesehen, daß diese erwärmte Luft in einem Luft-Wasser-Wärmetauscher die vorher aufgenommene Sonnenenergie an das Brauchwasser abgibt. Somit kann diese Luft zusätzlich zur Erwärmung des Brauchwassers verwendet werden.

Es wird noch vorgeschlagen, daß die durch eine Dachabdeckung hindurch geleitete Luft an dem Außenmauerwerk eines Hauses entlang geführt wird. Je nach Temperatur der Frischluft und des Außenmauerwerks kann somit entweder das Außenmauerwerk mit warmer Luft erwärmt werden oder die Frischluft kann dazu dienen, dem erwärmten Außenmauerwerk Wärme zu entziehen.

Als Vorrichtungen zur Durchführung des Verfahrens wird eine auf die anfallende Lüftungswärme des Gebäudes ausgelegte Luft-Wasser-Wärmepumpe und eine Wasser-Wasser-Wärmepumpe mit einem Verdampfer- und einem Kondensatorkreislauf vorgeschlagen, die sich dadurch auszeichnen, daß der Verdampfer- und Kondensatorkreislauf über mindestens eine Leitung verbindbar sind.

Durch die Verbindung von Verdampfer- und Kondensatorkreislauf ist es möglich, mit der aus der Fortluft gewonnenen Wärme der Luft-Wasser-Wärmepumpe die Temperaturniveaus der Kreisläufe je nach Temperaturniveau der gewünschten Nutzwärme so einander anzugleichen, daß der Unterschied der Temperaturniveaus möglichst klein ist.

Vorteilhaft ist die Verwendung von zwei Leitungen zwischen Verdampfer- und Kondensatorkreislauf, die es ermöglichen, durch eine Leitung den Wärmeträger vom Verdampferkreislauf in den Kondensatorkreislauf zu überführen und durch die andere Leitung den Wärmeträger vom Kondensatorkreislauf in den Verdampferkreislauf zu bringen.

Das erfindungsgemäße Verfahren und die erfindungsgemäßen Vorrichtungen erlauben eine Vielzahl von Schaltungsvarianten, die alle das Ziel haben, die Temperaturniveaus des Verdampfer- und Kondensatorkreislaufs einander anzunähern, um somit den Wirkungsgrad der Wärmepumpe zu erhöhen.

Ein Ausführungsbeispiel zur Darstellung des erfindungsgemäßen Verfahrens und einer erfindunggemäßen Vorrichtung ist in der Zeichnung dargestellt und wird im folgenden näher beschrieben:

Es zeigt
- Figur 1: eine schematische Darstellung der Verschaltung einer Wärmepumpenanlage mit weiteren Aggregaten in einem Wohngebäude,
- Figur 2: eine weitere schematische Darstellung der Anlagen,
- Figur 3: die Einbindung eines Blockheizkraftwerkes und
- Figur 4: die Luftzuführung in einem Wandelement.

Die erfindungsgemäße Schaltung weist eine Wasser-Wasser-Wärmepumpe 1 auf, die einen Verdampferkreislauf 2 mit einem Kondensatorkreislauf 3 verbindet. Außerdem ist im Kondensatorkreislauf 3 eine Luft-Wasser-Wärmepumpe 8 eingebunden. Die Rohre des Verdampfer- und Kondensatorkreislaufs liegen in Gebäudemassen 4 und 5, die als Wärmespeicher dienen und die Temperaturniveaus der einzelnen Kreisläufe stabilisieren. Dazu sind in den Gebäudemassen 4 und 5 eine Vielzahl an Rohren vorgesehen, die eine gleichmäßige Erwärmung oder Abkühlung der gesamten Gebäudemasse ermöglichen.

Der Verdampfer- und Kondensatorkreislauf haben jeweils eine Umwälzpumpe 6 und 7, die den in den Leitungen befindlichen Wärmeträger im Kreislauf pumpen. Außerdem befinden sich zwischen den Kreisläufen Ventile 9 und 10, die es erlauben, den Wärmeträger, der im vorliegenden Beispiel Wasser ist, vom Verdampferkreislauf in den Kondensatorkreislauf und umgekehrt vom Kondensatorkreislauf in den Verdampferkreislauf fließen zu lassen.

Das zu beheizende oder zu kühlende Haus 11, das im wesentlichen aus den Gebäudemassen 4 und 5 besteht, hat auch eine Dachabdeckung 12, durch die Luft 13 als Luftstrom hindurchgeleitet werden kann. Bei starker Sonnenbestrahlung der Gebäudeabdeckung 12, das heißt beispielsweise von einer Ziegeleindeckung, erwärmt sich die Abdeckung und der durchgeführte Luftstrom 13. Dieser erwärmte Luftstrom 13 wird über einen Luft-Wasser-Wärmetauscher 14 geleitet, um Brauchwasser 15 zu erwärmen, anschließend wird dieser Luftstrom 13 durch einen weiteren Luft-Wasser-Wärmetauscher 16 geleitet, um den Verdampferkreislauf 2 zu erwärmen. Hierzu wird zumindest ein Teilstrom des Verdampferkreislaufs 2 durch Leitungen 17 und 18 zum Luft-Wasser-Wärmetauscher 16 und wieder zurück geleitet. Die Ventile 19 und 20 ermöglichen es, den durch den Luft-Wasser-Wärmetauscher 16 geleiteten Teilstrom des Verdampferkreislaufs 2 zu regulieren.

Letztendlich kann der Frischluftstrom 13 noch dazu verwendet werden, hinter einer Wärmedämmung 21 das Außenmauerwerk des Hauses 11 und somit auch die Gebäudemasse 5 zu erwärmen oder zu kühlen. Wenn das Gebäudeinnere beispielsweise nach einem heißen Sommertag sehr warm ist, kann am Abend kühle Außenluft über den Wärmetauscher 16 der Beeinflussung des Wärmepumpenkreislaufs dienen, anschließend das Außenmauerwerk des Gebäudes kühlen und letztendlich kann diese Luft in die Räume des Gebäudes hineingeführt werden, um sie direkt zu kühlen.

Entsprechend kann aber auch beispielsweise an kalten Wintertagen der sich zwischen den Ziegeln erwärmte Luftstrom 13 zur Erwärmung des Brauchwassers im Luft-Wasser-Wärmetauscher 14 dienen, anschließend über den Luft-Wasser-Wärmetauscher 16 den Verdampferkreislauf auf ein höheres Temperaturniveau bringen und schließlich nach Erwärmung der Außenwände als Frischluftzufuhr im Gebäudeinneren verwendet werden.

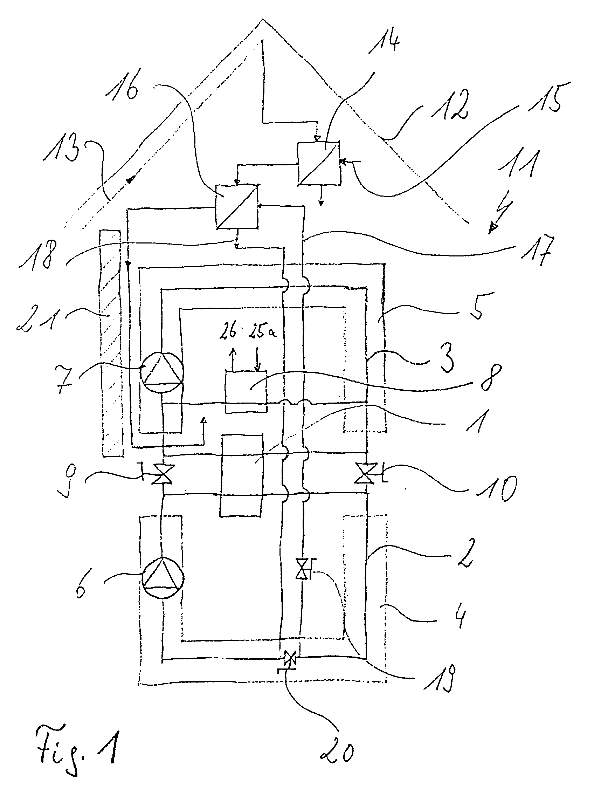

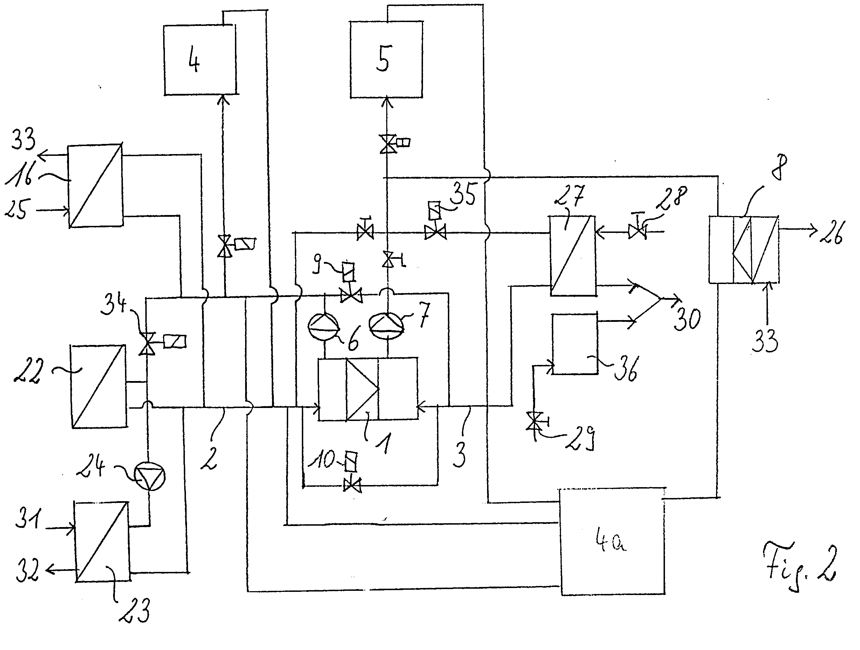

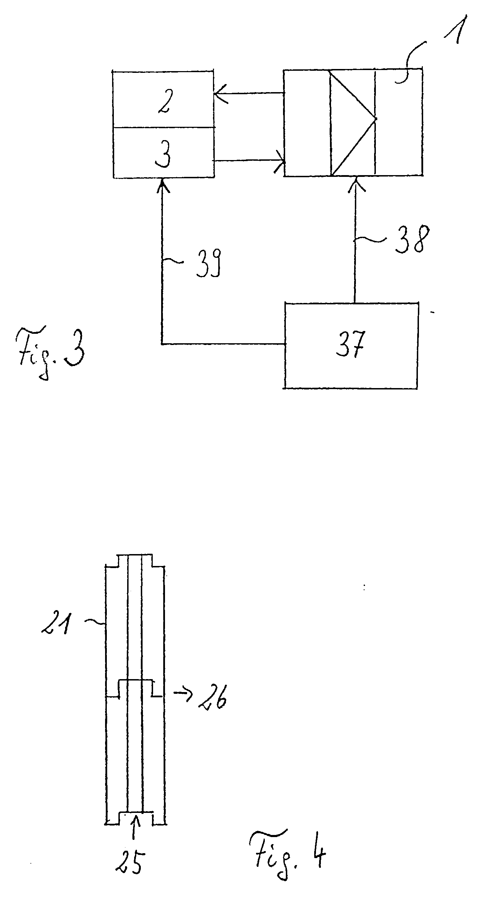

Das Verfahren kann noch dadurch optimiert werden, daß die Kraft-Wärmekopplung wie bei der Wärmenutzung auch bei der Stromerzeugung z. B. mit Hilfe eines Blockheizkraftwerks 37 angewendet wird (Fig.3). In diesem Fall wird die Abwärme 39 des Blockheizkraftwerks zur Angleichung der Temperaturniveaus von Kondensator- 3 und Verdampferkreislauf 2 der Wasser-Wasser-Wärmepumpe 1 genutzt.

Die Abluft 25 des Energiespeicherhauses 11 wird in entgegengesetzter Richtung wie beim Verfahren mit der europäischen Patentnummer 0236704 im Spalt der Wärmedämmung 21 geführt (Fig. 4). Die Wärme der Abluft 25 geht an die Wärmedämmung über und verringert den Temperaturgradienten zwischen Innenräumen und Wärmedämmung und damit den Transmissionswärmeverlust. Beim Einsatz eines Blockheizkraftwerkes können aus 1 kWh Primärenergie mindestens 2 kWh Niedertemperaturwärme gewonnen werden.

Dies ist nur ein Ausführungsbeispiel und für den Fachmann ergibt sich, daß mit entsprechenden Schaltungen auch auf den Kondensatorkreislauf eingewirkt werden kann und neben einer Temperaturbeeinflussung der Kreisläufe durch Sonnenenergie auch andere Energieträger oder Wärme- bzw. Kältespeicher Verwendung finden können.

Erfindungsgemäß stehen passive und aktive Möglichkeiten zur Verfügung, die Temperaturniveaus der Wärmepumpenkreisläufe aneinander anzugleich. Eine passive Möglichkeit ist z. B. die Nutzung von Decken und Fußböden als Wärme abgebende bzw. Wärme aufnehmende Fläche. Die effektivste aktive Maßnahme ist die Einspeisung der Abluftwärme über die Luft-Wasser-Wärmepumpe 18 in den Kondensatorkreislauf 3, wenn gleichzeitig der Verdampferkreislauf mit dem Kondensatorkreislauf verbunden ist. Wegen der hohen Ablufttemperatur ist die Verdampfungstemperatur der Luft-Wasser-Wärmepumpe hoch, die Kondensationstemperatur des Kältemittels aber niedrig, weil diese von der Mischtemperatur aus Verdampfer- und Kondensatorkreislauf der Wasser-Wasser-Wärmepumpe abhängt.

Beim Betreiben einer Wärmepumpe nach den bekannten Verfahren über längere Zeit in die Wintermonate hinein, wird dem Erdreich immer mehr Wärme entzogen und das Erdreich um das Haus kühlt sich immer weiter ab. Andererseits werden aber auch im Kondensatorkreislauf 3 höhere Temperaturen benötigt, um die beheizten Räume auch bei kalten Außentemperaturen zu erwärmen. Dadurch vergrößert sich der Unterschied zwischen den Temperaturniveaus des Verdampfer- 2 und des Kondensatorkreislaufs 3 und der Wirkungsgrad der Wärmepumpe 1 wird immer schlechter.

Eine weitere aktive Möglichkeit zur Erhöhung des Temperaturniveaus im Verdampferkreislauf 2 liegt darin, den Wärmeträger durch einen Wärmetauscher zu leiten, der im vorliegenden Beispiel als Luft-Wasser-Wärmetauscher ausgebildet ist und mit dem die Wärme eines in der Dachabdeckung 12 erwärmten Luftstromes 13 an den Wärmeträger des Verdampferkreislaufs abgegeben wird. Somit kann in den Zeiten, in denen Sonnenenergie aßfällt, diese Wärme an den Verdampferkreislauf 2 abgegeben werden, um die Temperaturdifferenz zwischen Verdampfer- 2 und Kondensatorkreislauf 3 zu verringern.

Eine andere Möglichkeit zum Erwärmen des Verdampferkreislaufs 2 besteht darin, in bestimmten Zeiten die Ventile 9 und 10 zu öffnen, um den Verdampferkreislauf 2 mit dem Kondensatorkreislauf 3 zu verbinden. Dadurch fließt der warme Wärmeträger des Kondensatorkreislaufs 3 in den Verdampferkreislauf und der kalte Wärmeträger des Verdampferkreislaufs 2 in den Kondensatorkreislauf 3. Durch eine relativ kurzzeitige Verbindung der Kreisläufe ist ebenfalls ein Angleichen der Temperaturniveaus zu erreichen und dies ermöglicht es, den Wirkungsgrad der Wärmepumpe zu steigern. Der erhöhte Wirkungsgrad der Wärmepumpe ermöglicht es dann, die Wärmepumpe nur noch zeitweise zu betreiben und vor allem in den Zwischenzeiten, in denen diese außer Betrieb ist, den Verdampfer 2 und den Kondensatorkreislauf 3 miteinander zu verbinden.

Eine besonders günstige Schaltung sieht dabei vor, den Warmluftstrom 13 zuerst zum Erwärmen von Brauchwasser 15 in einem Luft-Wasser-Wärmetauscher 14 zu verwenden, mit diesem Luftstrom dann in einem zweiten Luft-Wasser-Wärmetauscher 16 den Verdampferkreislauf zu erwärmen, den Luftstrom zum Erwärmen der Außenwand zu verwenden und schließlich den Luftstrom in das Gebäudeinnere zum Erwärmen der Räume zu leiten.

Mit dem Verfahren können energetisch günstig auch Kaltwasser und Warmwasser erzeugt werden. Dazu werden Wärmetauscher benötigt, die es ermöglichen Wärme sofort dorthin zu bringen, wo sie z. B. im Wasser gespeichert werden soll oder Wärme sofort da zu entziehen, wo man Kaltwasser haben möchte. Als Kaltwasser- und Warmwasserspeicher werden drucklose Wasserbehälter vorgeschlagen, die möglichst gleichmäßig verteilte Rohre enthalten, durch die entweder der Wärmeträger des Verdampferkreislaufs 2 bzw. der Wärmeträger des Kondensatorkreislaufs 3 fließen kann. Beim Brauchwasserspeicher müssen auch noch gleichmäßig verteilte Rohre vorhanden sein, durch die Brauchwasser fließen kann, um Wärme aus dem Warmwasserspeicher aufzunehmen. Wenn das Brauchwasser 15 noch nicht die gewünschte Temperatur erreicht hat, wird es mit Wasser aus einem Durchlaufspeicher 36 gemischt.

Das erfindungsgemäße Verfahren bietet auch die Möglichkeit Kühlräume energetisch günstig zu betreiben, wenn die Vorrichtung aus Anspruch 20 mit Kaltwasser aus dem Kaltwasserspeicher 20 beaufschlagt wird. Die im Luft-Wasser-Wärmetauscher 23 entstehende Kaltluft sorgt dann dafür, daß die Luft 31 im Kühlraum, auch ohne den Energieverbrauch eines Ventilators, umgewälzt wird.

### Liste der verwendeten Bezugszeichen

- 1: Wasser-Wasser-Wärmepumpe
- 2: Verdampferkreislauf
- 3: Kondensatorkreislauf
- 4: Gebäudemasse für Verdampferkreislauf
- 4a: Wasser-Pufferspeicher
- 5: Gebäudemasse für Kondensatorkreislauf
- 6: Umwälzpumpe für Verdampferkreislauf
- 7: Umwälzpumpe für Kondensatorkreislauf
- 8: Luft-Wasser-Wärmepumpe
- 9: Ventil zwischen Verdampferkreislauf und Kondensatorkreislauf
- 10: Ventil zwischen Verdampferkreislauf und Kondensatorkreislauf
- 11: Gebäude (z.B. Energiespeicherhaus)
- 12: Dachabdeckung
- 13: Frischluft
- 14: Luft-Wasser-Wärmetauscher (Frischluft/Brauchwasser)
- 15: Brauchwasser
- 16: Luft-Wasser-Wärmetauscher (Frischluft/Brauchwasser)
- 17: Teilstrom des Verdampferkreislaufs (Vorlauf)
- 18: Teilstrom des Verdampferkreislaufs (Rücklauf)
- 19: Ventil zur Regulierung des Verdampferkreislaufteilstroms
- 20: Ventil zur Regulierung des Verdampferkreislaufteilstroms
- 21: Wärmedämmung
- 22: Kaltwasserspeicher
- 23: Luft-Wasser-Wärmetauscher (Kühlraum)
- 24: Umwälzpumpe für Kühlraum
- 25: Abluft aus den Räumen des Gebäudes
- 26: Fortluft aus dem Gebäude
- 27: Brauchwasserspeicher
- 28: Regulierventil für vorgewärmtes Brauchwasser
- 29: Regulierventil für den Brauchwasserteilstrom aus dem Durchlaufspeicher
- 30: Brauchwasser auf Nutzungstemperatur
- 31: Kühlraumluft
- 32: Abgekühlte Kühlraumluft
- 33: vorgewärmte Abluft
- 34: Ventil für Kaltwasserspeicher
- 35: Ventil für Brauchwasserspeicher
- 36: Durchlaufspeicher
- 37: Blockheizkraftwerk
- 38: Strom aus Blockheizkraftwerk
- 39: Abwärme aus Blockheizkraftwerk

## Patentansprüche

1. Verfahren zum Betreiben einer Wasser-Wasser-Wärmepumpe (1) mit der einem Verdampferkreislauf (2) Wärmeenergie entzogen wird und einem Kondensatorkreislauf (3) zugeführt wird, dadurch gekennzeichnet, daß die Temperaturniveaus vom Kondensatorkreislauf (3) und Verdampferkreislauf (2) je nach Temperaturniveau der gewünschten Nutzwärme so beeinflußt werden, daß der Unterschied möglichst klein ist.

2. Verfahren nach Anspruch 1, dadurch gekennzeichnet, daß Verdampferkreislauf (2) und Kondensatorkreislauf (3) durch Gebäudemassen als Wärmespeicher in ihrem Temperaturniveau stabilisiert werden.

3. Verfahren nach einem der vorhergehenden Ansprüche, dadurch gekennzeichnet, daß Gebäuderäumen über Decken und/oder Fußböden Wärme zugeführt bzw. entzogen wird.

4. Verfahren nach einem der vorhergehenden Ansprüche, dadurch gekennzeichnet, daß in der Heizperiode die Wärme mit einer auf die anfallende Lüftungswärme des Gebäudes ausgelegten Luft-Wasser-Wärmepumpe den Gebäudemassen, die als Wärmespeicher dienen, und/oder einem Wasser-Pufferspeicher (4a) zugeführt wird.

5. Verfahren nach einem der vorhergehenden Ansprüche, dadurch gekennzeichnet, daß bei Betrieb der Wasser-Wasser-Wärmepumpe das Wasser aus dem Verdampfer durch einen Luft-Wasser-Wärmetauscher gepumpt wird, dabei Wärme aus der Abluft aufnimmt, und vor Wiedereintritt in den Verdampferkreislauf auf ein höheres Temperaturniveau gebracht wird.

6. Verfahren nach einem der vorhergehenden Ansprüche, dadurch gekennzeichnet, daß die Wärmekreisläufe (2, 3') miteinander verbunden werden, wenn der Kompressor der Wasser-Wasser-Wärmepumpe außer Betrieb ist.

7. Verfahren nach einem der vorhergehenden Ansprüche, dadurch gekennzeichnet, daß Sonnenenergie dem Verdampferkreislauf (2) zugeführt wird.

8. Verfahren nach einem der vorhergehenden Ansprüche, dadurch gekennzeichnet, daß die Abwärme eines Blockheizkraftwerks dem Verdampferkreislauf (2) zugeführt wird.

9. Verfahren nach einem der vorhergehenden Ansprüche, dadurch gekennzeichnet, daß Abluft aus dem Gebäude in einem Spalt einer Wärmedämmung oder zwischen Wärmedämmung und Mauerwerk Wärme abgibt und als Fortluft über Konstruktionsspalte oder Öffnungen an die Außenluft abgegeben wird.

10. Verfahren nach einem der vorhergehenden Ansprüche, dadurch gekennzeichnet, daß als Wärmeträger Wasser oder eine wässrige Lösung verwendet wird.

11. Verfahren nach einem der vorhergehenden Ansprüche, dadurch gekennzeichnet, daß der Wärmeträger aus dem Verdampfer den Kondensatorkreislauf (3) und umgekehrt der Wärmeträger aus dem Kondensator den Verdampferkreislauf (2) durchströmt.

12. Verfahren nach einem der vorhergehenden Ansprüche, dadurch gekennzeichnet, daß weitere Wärmespeicher, wie Brauchwasserspeicher oder Kaltwasserspeicher in den Optimierungsprozeß einbezogen werden.

13. Verfahren nach Anspruch 7, dadurch gekennzeichnet, daß Dachziegel als Sonnenenergie-Kollektor dienen.

14. Verfahren nach Anspruch 7 oder 13, dadurch gekennzeichnet, daß eine Frischluftzufuhr für ein Energiespeicherhaus als Energieträger für die Sonnenenergie dient.

15. Verfahren nach Anspruch 14, dadurch gekennzeichnet, daß die Frischluft in einem Luft-Wasser-Wärmetauscher Sonnenenergie an das Brauchwasser abgibt.

16. Verfahren nach Anspruch 14 oder 15, dadurch gekennzeichnet, daß die Frischluft so geführt wird, daß sie Sonnenenergie an das Außenmauerwerk abgibt (Wandheizung).

17. Verfahren nach Anspruch 14 oder 15, dadurch gekennzeichnet, daß die Frischluft so geführt wird, daß sie Sonnenernergie dem Außenmauerwerk Wärme entzieht (Wandkühlung).

18. Vorrichtung zur Durchführung des Verfahrens nach den Ansprüchen 1 bis 17 mit einer Wasser-Wasser-Wärmepumpe (1), einem Verdampferkreislauf (2), einem Kondensatorkreislauf (3) und einer Luft-Wasser-Wärmepumpe (1a) und einem Wasser-Pufferspeicher (4a), dadurch gekennzeichnet, daß der Verdampferkreislauf (2) und der Kondensatorkreislauf (3) über mindestens eine Leitung verbindbar sind.

19. Vorrichtung nach Anspruch 18 mit einem Kaltwasserspeicher, dadurch gekennzeichnet, daß im Verdampfer der Wasser-Wasser-Wärmepumpe abgekühltes Wasser durch spiralförmig gewickelte, im ganzen Behälter verteilte Rohre fließt, und das als Speicher dienende Wasser gleichmäßig kühlt.

20. Vorrichtung nach Anspruch 18 mit einem Brauchwasserspeicher, dadurch gekennzeichnet, daß sich im Speicher mindestens zwei ineinander gesetzte spiralförmig gewickelte, im ganzen Behälter verteilte Kupfer- bzw. Edelstahlrohrbündel befinden, durch die zum einen durch den Kondensator der Wasser-Wasser-Wärmepumpe aufgewärmtes Wasser fließt und zum anderen nachströmendes kaltes Brauchwasser durch die gleichmäßige Aufheizung des Speichers mindestens vorgewärmt wird.

21. Vorrichtung nach Anspruch 18 zur Brauchwassererzeugung, dadurch gekennzeichnet, daß durch den Speicher mindestens vorgewärmtes Brauchwasser mit parallel aufgeheiztem Wasser aus einem Durchlaufspeicher gemischt wird.

22. Vorrichtung nach Anspruch 18 zum Kühlen von Räumen, dadurch gekennzeichnet, daß ein Luft-Wasser-Wärmetauscher unterhalb der Decke eines Raumes mit einem Fallrohr bis fast zum Boden versehen ist, so daß die warme Raumluft oben in die Vorrichtung eintritt und in Bodennähe als Kaltluft herausfällt.
